# EUROPEAN PATENT APPLICATION

(11) **EP 4 112 320 A2**
(43) Date of publication of application: **04.01.2023**
(21) Application number: 22180788.6
(22) Date of filing: 23.06.2022
(51) Int. Cl.: B41M 7/00, B41M 5/00

(54) **METHOD FOR MANUFACTURING RECORDED MATTER**

(30) Priority: 25.06.2021 JP 2021105467
(71) Applicant: Seiko Epson Corporation, Tokyo 160-8801 (JP)
(72) Inventor: SATO, Chigusa, Suwa-shi, 392-8502 (JP); SEKINE, Midori, Suwa-shi, 392-8502 (JP); TANAKA, Kyohei, Suwa-shi, 392-8502 (JP); KOYAMA, Haruya, Suwa-shi, 392-8502 (JP)
(74) Representative: Miller Sturt Kenyon

(57) **Abstract**

A method for manufacturing a recorded matter includes: a first ejection step of ejecting a first ink which is a radiation curable ink jet composition; a first emission step of emitting radioactive rays to form a cured coating film of the first ink; a second ejection step of ejecting a second ink which is a radiation curable ink jet composition; a second emission step of emitting radioactive rays to cure the second ink; and a lamination step of laminating the recorded matter such that a recording surface and a non-recording surface face each other. In addition, the first ink contains a polymerizable compound including a monofunctional monomer, a content of the monofunctional monomer with respect to a total mass of the polymerizable compound contained in the first ink is 80 percent by mass or more, the first ink is a non-white ink, and the second ink is a white ink containing a titanium oxide.

## Description

The present application is based on, and claims priority from JP Application Serial Number 2021-105467, filed June 25, 2021, the disclosure of which is hereby incorporated by reference herein in its entirety.

### BACKGROUND

### 1. Technical Field

The present disclosure relates to a method for manufacturing a recorded matter.

### 2. Related Art

Since being capable of recording a highly fine image by a relatively simple apparatus, an ink jet recording method has been rapidly developed in various fields. For example, in order to perform printing on a transparent or an opaque packaging material in a flexible manner, JP-A-2003-285427 has disclosed an ink jet printer which includes a white head to eject a white ink, process color heads to eject individual inks of process colors, and a control device which selectively controls whether surface printing or reverse printing is performed. In the case described above, for example, in order to impart durability against abrasion of a printing surface, the reverse printing described above is printing performed on a rear side of a packaging material and is performed in a manner such that an image is printed with inks of process colors using a transparent recording medium, and subsequently, a background is printed with a white ink.

However, when recording is performed by the ink jet printer disclosed in JP-A-2003-285427 using a non-absorbing recording medium or a low-absorbing recording medium each of which has a low ink absorbing ability as the recording medium, adhesion of an ink coating film to the recording medium may not be sufficient in some cases. In addition, after recording is performed on a long recording medium, this recording medium to which inks are adhered is rolled and stored in the form of a roll in some cases. When a recording medium on which recording is already performed is stored in the form of a roll as described above, blocking may disadvantageously occur in some cases in a manner such that a recording surface of the recording medium to which the individual ink layers of the process colors and the ink layer of the white ink are adhered and a non-recording surface opposite to the recording surface are stuck to each other.

### SUMMARY

According to an aspect of the present disclosure, there is provided a method for manufacturing a recorded matter, comprising: a first ejection step of ejecting a first ink which is a radiation curable ink jet composition from a first ink jet head so as to be adhered to a recording medium; a first emission step of emitting radioactive rays to the first ink adhered to the recording medium to form a cured coating film of the first ink; a second ejection step of ejecting a second ink which is a radiation curable ink jet composition from a second ink jet head so as to be adhered to the cured coating film of the first ink; a second emission step of emitting radioactive rays to the second ink adhered to the recording medium to cure the second ink so as to form at least one recorded matter; and a lamination step of laminating the recorded matter such that a recording surface to which the first ink and the second ink are adhered and a non-recording surface to which the first ink and the second ink are not adhered face each other. In the method described above, the first ink contains a polymerizable compound including a monofunctional monomer, and a content of the monofunctional monomer with respect to a total mass of the polymerizable compound contained in the first ink is 80 percent by mass or more, the first ink is a non-white ink, and the second ink is a white ink containing a titanium oxide as a colorant.

### BRIEF DESCRIPTION OF THE DRAWINGS

FIG. 1 is a schematic view of a recording apparatus which can be used in this embodiment.
FIG. 2 is a schematic cross-sectional view of a recorded matter according to this embodiment.

### DESCRIPTION OF EXEMPLARY EMBODIMENTS

Hereinafter, if needed, with reference to the drawings, an embodiment (hereinafter, referred to as "this embodiment") of the present disclosure will be described in detail. However, the present disclosure is not limited thereto and may be variously changed and/or modified within the scope of the present disclosure. In addition, in the drawings, the same element is to be designated by the same reference numeral, and duplicated description is omitted. In addition, the positional relation between up and down and/or left and right is based upon the positional relation shown in the drawing unless otherwise particularly noted. Furthermore, a dimensional ratio in the drawing is not always limited to the ratio shown in the drawing.

In the specification, "(meth)acryloyl" indicates at least one of an acryloyl and a methacryloyl corresponding thereto, "(meth)acrylate" indicates at least one of an acrylate and a methacrylate corresponding thereto, and "(meth)acryl" indicates at least one of an acryl and a methacryl corresponding thereto.

### 1. Method for Manufacturing Recorded Matter

A method for manufacturing a recorded matter according to this embodiment, includes: a first ejection step of ejecting a first ink which is a radiation curable ink jet composition from a first ink jet head so as to be adhered to a recording medium; a first emission step of emitting radioactive rays to the first ink adhered to the recording medium to form a cured coating film of the first ink; a second ejection step of ejecting a second ink which is a radiation curable ink jet composition from a second ink jet head so as to be adhered to the cured coating film of the first ink; a second emission step of emitting radioactive rays to the second ink adhered to the recording medium to cure the second ink so as to form at least one recorded matter; and a lamination step of laminating the recorded matter such that a recording surface to which the first ink and the second ink are adhered (hereinafter, simply referred to as "recording surface" in some cases) and a non-recording surface to which the first ink and the second ink are not adhered (hereinafter, simply referred to as "non-recording surface" in some cases) face each other. In the method described above, the first ink contains a polymerizable compound including a monofunctional monomer, and a content of the monofunctional monomer with respect to a total mass of the polymerizable compound contained in the first ink is 80 percent by mass or more, the first ink is a non-white ink, and the second ink is a white ink containing a titanium oxide as a colorant.

The first ink, that is, the non-white ink, contains a polymerizable compound including a monofunctional monomer, and a content of the monofunctional monomer with respect to the total mass of the polymerizable compound contained in the first ink is 80 percent by mass or more. Since the content of the monofunctional monomer of the first ink is 80 percent by mass or more with respect to the total mass of the polymerizable compound contained in the first ink, flexibility of the cured coating film can be increased. Hence, followability of the cured coating film to the recording medium can be enhanced, and a method for manufacturing a recorded matter having an excellent adhesion can be provided.

On the other hand, when the adhesion of the cured coating film of the first ink is enhanced by increasing the content of the monofunctional monomer with respect to the total mass of the polymerizable compound, in the case in which the recorded matter is laminated such that the recording surface and the non-recording surface face each other, the recording surface and the non-recording surface are liable to be closely stuck to each other, and hence, blocking is liable to occur. However, in the method for manufacturing a recorded matter of the present disclosure, the second ink to be adhered to the cured coating film of the first ink contains a titanium oxide as the colorant. Hence, when the recorded matter is laminated such that the recording surface and the non-recording surface face each other, the titanium oxide which is hard particles contained in the second ink suppresses the recording surface and the non-recording surface from being closely stuck to each other, and as a result, the blocking is suppressed.

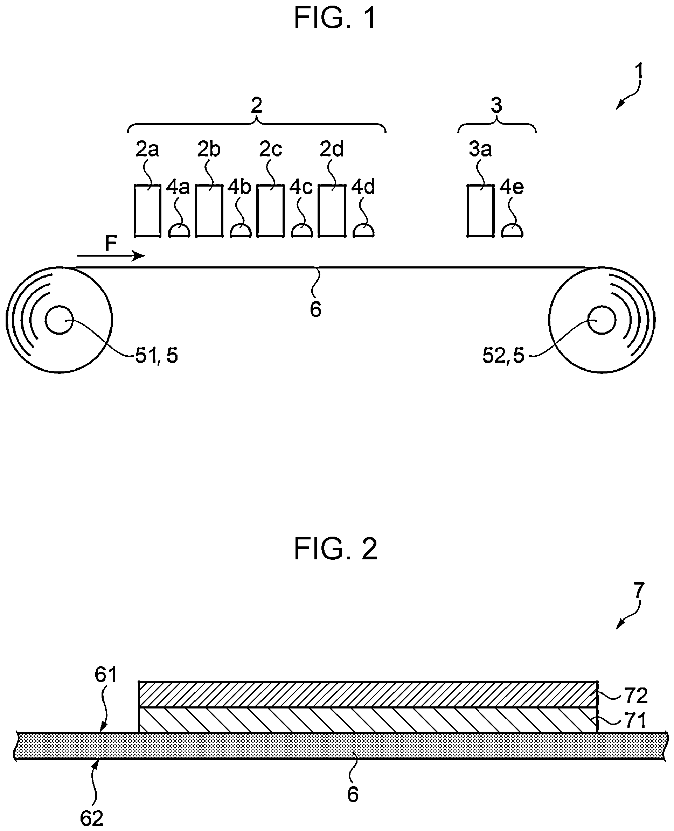

Before the individual steps will be described, a recording apparatus which can be used for the method for manufacturing a recorded matter of this embodiment will be described with reference to FIG. 1.

As shown in FIG. 1, a recording apparatus 1 includes a first ink jet head 2 to eject the first ink, a second ink jet head 3 to eject the second ink, and a transport mechanism 5 for a recording medium 6. The first ink jet head 2 may have first ink jet heads 2a to 2d for respective types of inks. In addition, downstream of the first ink jet heads 2a to 2d in a transport direction F, radiation sources 4a and 4d to cure the first ink adhered to the recording medium 6 are provided.

In addition, the second ink jet head 3 includes, for example, a second ink jet head 3a to adhere the second ink, and downstream thereof, a radiation source 4e to cure the second ink adhered to the recording medium 6.

The transport mechanism 5 for the recording medium 6 includes, for example, a feeding roller 51 and a winding roller 52, the feeding roller 51 feeds the recording medium 6 in the transport direction F, and the winding roller 52 winds the recording medium 6 on which the recording is performed, so that a wound body can be obtained. When the winding is performed, a recording surface 61 and a non-recording surface 62 of a recorded matter 7 shown in FIG. 2 come into contact with each other in the wound body.

### 1.1. First Ejection Step

The first ejection step is a step to eject the first ink which is a radiation curable ink jet composition from the first ink jet head 2 so as to be adhered to the recording medium 6. In more particular, by driving a pressure generation device, the first ink filled in a pressure generation chamber of the first ink jet head 2 is ejected from a nozzle. The ejection method as described above is also called an ink jet method.

In this embodiment, as the first ink, non-white inks containing different types of colorants are used and ejected from the first ink jet heads 2a to 2d. In addition, the first ink jet heads 2a to 2d may eject only one type of non-white ink or may eject at least two types of non-white inks. The first ink will be described later in detail.

As the first ink jet head 2 used in the first ejection step and the second inkjet head 3 used in the second ejection step which will be described later, a line head to perform recording by a line method or a serial head to perform recording by a serial method may be mentioned.

In the line method using a line head, for example, the first ink jet head 2 and the second ink jet head 3 are fixed to the recording apparatus 1. The first ink jet head 2 and the second ink jet head 3 are each a line ink jet head in which nozzles to eject inks are formed in a direction intersecting the transport direction F of the recording medium 6 so as to cover a printing area of the recording medium 6 in the direction described above. In addition, the recording medium 6 is transferred in the transport direction F, and in association with this transfer, the first ink and the second ink (hereinafter, the first ink and the second ink are collectively called "inks" in some cases) are ejected respectively from the nozzles of the first ink jet head 2 and the second ink jet head 3, so that an image is recorded on the recording medium 6.

In the serial method using a serial head, for example, the first ink jet head 2 and the second ink jet head 3 are mounted on a carriage which can be transferred in a width direction of the recording medium 6. In addition, the carriage is transferred in a main scanning direction (a lateral direction or a with direction of the recording medium 6), and in association with this transfer, the inks are ejected from the nozzles of the first ink jet head 2 and the second ink jet head 3, so that an image is recorded on the recording medium 6.

Of the two methods described above, since the recording medium 6 to which the inks are adhered is wound around, the line method is preferably used in the first ejection step and also in the second ejection step which will be described later. In the case of the line method, while the recording medium 6 is continuously transported, the recording by the line head and the emission of radioactive rays from the radiation sources 4a to 4e are performed, and downstream thereof, the recording medium 6 to which the inks are adhered can be wound around. In addition, since the line method is used, the recorded matter 7 can be manufactured at a high efficiency. In addition, the type of the recording apparatus 1 shown in FIG. 1 is a line type.

Adhesion conditions, such as a duty, of the first ink in the first ejection step are not particularly limited and may be appropriately adjusted in accordance with a target image.

In addition, in the method for manufacturing a recorded matter of this embodiment, the first ink is a non-white ink, and the second ink is a white ink. Since the second ink contains a titanium oxide in the form of hard particles, when the recorded matter 7 is laminated such that the recording surface 61 and the non-recording surface 62 face each other, the recording surface 61 and the non-recording surface 62 are suppressed from being closely stuck to each other, and hence, the blocking can be suppressed.

As the recording medium 6, although either an ink absorbing recording medium in which the recording surface 61 has an ink absorbing property or a non-absorbing recording medium in which the recording surface 61 has not an ink absorbing property may be used without any particular restrictions, a non-absorbing recording medium is preferable. In particular, the recording medium 6 to be used in this embodiment is preferably a non-absorbing recording medium in which the recording surface 61 and the non-recording surface 62 both do not absorb the ink. Since the recording medium 6 as described above is used, a recorded matter suitable for a label application and the like can be obtained. In addition, in the case in which the non-absorbing recording medium is used, when the recorded matter 7 is laminated such that the recording surface 61 and the non-recording surface 62 face each other, the recording surface 61 and the non-recording surface 62 are liable to be closely stuck to each other. However, the titanium oxide contained in the second ink suppresses the recording surface 61 and the non-recording surface 62 of the recorded matter 7 from being closely stuck to each other, and as a result, the recording surface 61 and the non-recording surface 62 are suppressed from being stuck to each other.

Although the non-absorbing recording medium is not particularly limited, for example, there may be mentioned a film or a plate of a plastic, such as a poly(vinyl chloride), a polyethylene, a polypropylene, a poly(ethylene terephthalate) (PET), a polycarbonate, a polystyrene, or a polyurethane; a plate of a metal, such as iron, silver, copper, or aluminum; a metal plate or a plastic-made film formed by deposition of at least one of the above various metals; a plate of an alloy, such as stainless steel or brass; or a recording medium in which a film of a plastic, such as a poly(vinyl chloride), a polyethylene, a polypropylene, a poly(ethylene terephthalate) (PET), a polycarbonate, a polystyrene, or a polyurethane, is adhered (coated) to a paper-made substrate.

In addition, a "non-absorbing property" in this embodiment indicates a "property having a water absorption amount of 10 mL/m² or less for 30 msec from a contact start by Bristow method". In addition, the non-absorbing recording medium indicates a recording medium having the non-absorbing property as described above. This Bristow method is a most popular measurement method of a liquid absorption amount in a short time and has also been employed by Japan Technical Association of the Pulp and Paper Industry (JAPAN TAPPI). The details of the test method have been disclosed in Standard No. 51 "Paper and Paperboard-Liquid Absorption Test Method-Bristow Method", JAPAN TAPPI PAPER AND PULP TEST METHODS, 2000.

The recording medium 6 is preferably a transparent substrate. Since the transparent substrate is used as the recording medium 6, an image formed by the non-white ink which is the first ink can be viewed from a non-recording surface 62 side of the recording medium 6. Furthermore, a cured coating film 72 of the white ink which is the second ink forms a background of the image formed by the non-white ink and is able to shield light to pass through the transparent substrate, and hence, a recorded matter 7 having an excellent visibility can be formed.

In this embodiment, the transparent substrate is not particularly limited as long as having a transparency so that an image recorded on one side surface can be viewed from the other side surface, and in accordance with the purpose, the shape, the structure, the average thickness, and the material may be appropriately selected.

In the present disclosure, the transparency indicates a property defined by a haze degree measured in accordance with ASTM D1003 or ISO 14782. The haze degree is preferably 30% or less and more preferably 10% or less.

A method to measure the haze degree is not particularly limited and may be appropriately selected in accordance with the purpose, and for example, a haze meter (machine name: HZ-V3, manufactured by Suga Test Instruments Co., Ltd.) may be mentioned.

As a formation material to form the transparent substrate, for example, there may be mentioned a polyester-based resin, such as a poly(ethylene terephthalate), a polyamide-based resin, such as a nylon (registered trademark) or an aramid, a polyolefin-based resin, such as a polyethylene or a polypropylene, a polycarbonate-based resin, a polystyrene-based resin, or a polyacetal-based resin. Among those formation materials, in view of versatility and easy availability, one of a poly(ethylene terephthalate), a polyolefin, and a nylon is preferably contained.

### 1.2. First Emission Step

The first emission step is a step to obtain a cured coating film 71 of the first ink by emitting radioactive rays from the radiation sources 4a to 4d to the first ink adhered to the recording medium 6. When the radioactive rays are emitted, since a polymerization reaction of a monomer is started, the first ink is cured, and hence, the cured coating film 71 is formed. In this step, when a photopolymerization initiator is contained in the first ink, active species (starting species), such as radicals, acids, or bases, are generated, and the polymerization reaction of the monomer is promoted by the function of the starting species.

In the recording apparatus 1, the first ink jet heads 2a to 2d and the radiation sources 4a to 4d are alternately disposed along the transport direction F of the recording medium 6. Since the arrangement as described above is formed, before the first ink to be ejected from the first ink jet head 2b located downstream in the transport direction F is adhered to the recording medium 6, the first ink ejected from the first ink jet head 2a and adhered to the recording medium 6 can be cured by emission of radioactive rays from the radiation source 4a. In the same manner as described above, before the first ink to be ejected from the first ink jet head 2c or 2d located downstream in the transport direction F is adhered to the recording medium 6, the first ink ejected from the first ink jet head 2b or 2c and adhered to the recording medium 6 can be cured by emission of radioactive rays from the radiation source 4b or 4c, respectively. Hence, when different non-white inks are ejected from the respective first ink jet heads 2a to 2d, generation of bleeding between the colors can be suppressed.

In this step, as the radioactive rays, for example, ultraviolet rays, infrared rays, visible light rays, or X-rays may be mentioned. Although the radiation sources 4a to 4d are not particularly limited, for example, an ultraviolet light emitting diode (UV-LED) may be mentioned. When the radiation sources 4a to 4d as described above are used, reduction in size and cost of the apparatus can be realized. Since having a small size, the UV-LED as the radiation source can be fitted to the recording apparatus 1.

### 1.3. Second Ejection Step

The second ejection step is a step to eject the second ink which is a radiation curable ink jet composition from the second ink jet head 3 so as to be adhered to the cured coating film 71 of the first ink. The second ink is adhered to the cured coating film 71 of the first ink adhered to the recording medium 6. The second ink may be adhered to a region of the recording medium 6 in which the cured coating film 71 of the first ink is not formed.

The second ink is a white ink containing a titanium oxide as the colorant. Since the cured coating film 72 of the second ink containing a titanium oxide in the form of hard particles is adhered to the cured coating film 71 of the first ink, when the recorded matter 7 is laminated such that the recording surface 61 and the non-recording surface 62 face each other, the recording surface 61 and the non-recording surface 62 are suppressed from being closely stuck to each other, and hence, the blocking is suppressed. Furthermore, since the second ink is a white ink, when a transparent substrate is used as the recording medium 6, and when the recorded matter 7 is viewed from a non-recording surface 62 side of the recording medium 6, the second ink forms a background of the image formed by the first ink. Furthermore, since the cured coating film 72 of the second ink shields light to pass through the transparent substrate, a recorded matter 7 having an excellent visibility can be obtained. The second ink will be described later.

### 1.4. Second Emission Step

The second emission step is a step to cure the second ink adhered to the recording medium 6 by emitting radioactive rays from the radiation source 4e to the second ink and is a step to obtain the recorded matter 7. Accordingly, the second ink adhered to the recording medium 6 can be cured.

In addition, in order to sufficiently cure the first ink and the second ink, a radiation source not shown may also be provided beside the radiation sources 4a to 4e.

### 1.5. Lamination Step

The lamination step is a step to laminate the recorded matter 7 such that the recording surface 61 and the non-recording surface 62 face each other.

Although a lamination method in the lamination step is not particularly limited, for example, besides a lamination method in which recorded matters 7 in the form of single sheets are laminated to each other such that recording surfaces 61 face non-recording surfaces 62, there may also be mentioned a lamination method in which a recorded matter 7 obtained by continuous recording on a long recording medium 6 is wound in the form of a roll downstream of the recording apparatus 1 such that the recording surface 61 faces the non-recording surface 62. In more particular, since the recording medium 6 is wound by the winding roller 52, the recorded matter 7 can be formed into a wound body. In this wound body, the recorded matter 7 is wound by laminating such that the recording surface 61 and the non-recording surface 62 face each other.

Since the recorded matter 7 is wound in the form of a roll as described above, the recording surface 61 and the non-recording surface 62 are strongly pushed to each other in the roll or may be rubbed with each other in some cases when the roll is formed. According to the present disclosure, the second ink, which is a white ink, contains a titanium oxide in the form of hard particles. Hence, the recording surface 61 and the non-recording surface 62 are suppressed from being closely stuck to each other, and hence, the blocking can be suppressed. 1.6. First Ink

The first ink is a radiation curable ink jet composition. The radiation curable ink jet composition in this embodiment indicates an ink to be cured when being irradiated with radioactive rays. As the radioactive rays, for example, ultraviolet rays, electron rays, infrared rays, visible light rays, or X-rays may be mentioned. Among those mentioned above, since radiation sources are easily available and have been widely used, and since materials suitably cured by emission of ultraviolet rays are easily available and have been widely used, as the radioactive rays, ultraviolet rays are preferable.

The first ink is a non-white ink and includes color inks and a black ink. As the color inks, inks, such as a yellow ink, a magenta ink, and a cyan ink, containing chromatic colorants may be mentioned. In addition, in the non-white ink, an ink which contains no colorant or which contains a colorant so as not to perform coloring (for example, the content thereof is 0.1 percent by mass or less), that is, a so-called clear ink, is not included. Although components to be contained in the first ink are not particularly limited, for example, a polymerizable compound, a photopolymerization initiator, a polymerization inhibitor, a surfactant, a colorant, and/or a dispersant may be contained. Hereinafter, the individual components contained in the first ink will be described in detail.

### 1.6.1. Colorant

The first ink contains a non-white colorant, that is, a color colorant or a black colorant. As the colorant, at least one of a pigment and a dye may be used.

When the pigment is used as the colorant, a light resistance of the first ink can be improved. As the pigment, an inorganic pigment and/or an organic pigment may be used.

As the inorganic pigment, for example, a carbon black (C.I. (Colour Index Generic Name) Pigment Black 7), such as a furnace black, a lamp black, an acetylene black, or a channel black; or an iron oxide may be used.

As the organic pigment, for example, there may be mentioned an azo pigment, such as an insoluble azo pigment, a condensed azo pigment, an azo lake, or a chelate azo pigment; a polycyclic pigment, such as a phthalocyanine pigment, a perylene pigment, a perinone pigment, an anthraquinone pigment, a quinophthalone pigment, a dioxane pigment, a thioindigo pigment, an isoindolinone pigment, or a quinophthalone pigment; a dye chelate (such as a basic dye type chelate or an acidic dye type chelate), a dye lake (such as a basic dye type lake or an acidic dye type lake), a nitro pigment, a nitroso pigment, an aniline black, or a daylight fluorescent pigment.

In more particular, as the pigment used for the yellow ink, for example, there may be mentioned C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 155, 167, 172, or 180.

As the pigment used for the magenta ink, for example, there may be mentioned C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48(Ca), 48(Mn), 57(Ca), 57:1, 88, 112, 114, 122, 123, 144, 146, 149, 150, 166, 168, 170, 171, 175, 176, 177, 178, 179, 184, 185, 187, 202, 209, 219, 224, or 245, or C.I. Pigment Violet 19, 23, 32, 33, 36, 38, 43, or 50.

As the pigment used for the cyan ink, for example, there may be mentioned C.I. Pigment Blue 1, 2, 3, 15, 15:1, 15:2, 15:3, 15:34, 15:4, 16, 18, 22, 25, 60, 65, or 66, or C.I. Vat Blue 4 or 60.

As the pigment other than those used for the magenta, the cyan, and the yellow inks, for example, there may be mentioned C.I. Pigment Green 7 or 10, C.I. Pigment Brown 3, 5, 25, or 26, or C.I. Pigment Orange 1, 2, 5, 7, 13, 14, 15, 16, 24, 34, 36, 38, 40, 43, or 63.

As the pigment used for the black ink, for example, there may be mentioned No.2300, No. 900, MCF88, No.33, No.40, No.45, No.52, MA7, MA8, MA100, or No.2200B (manufactured by Mitsubishi chemical Co., Ltd.); Raven (registered trademark) 5750, Raven 5250, Raven 5000, Raven 3500, Raven 1255, Raven 700, Regal 400R, Regal 330R, or Regal 660R (manufactured by Columbia Carbon Inc.); Mogul (registered trademark) L, Monarch (registered trademark) 700, Monarch 800, Monarch 880, Monarch 900, Monarch 1000, Monarch 1100, Monarch 1300, or Monarch 1400 (manufactured by Cabot Corporation); or Color Black FW1,Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, or Special Black 4 (manufactured by Degussa AG.).

The pigments described above may be used alone, or at least two types thereof may be used in combination. In addition, when the above pigment is used, an average particle diameter thereof is preferably 300 nm or less and more preferably 50 to 200 nm. When the average particle diameter described above is in the above range, reliability, such as an ejection stability and a dispersion stability, of the first ink can be made more excellent, and an image having an excellent image quality can be formed. In addition, the average particle diameter in this specification indicates a Dv₅₀ value measured by a dynamic light scattering method.

When the colorant is the pigment, the pigment can be used in the form of a pigment dispersion liquid, and if needed, a dispersant may also be used. Although the dispersant is not particularly limited, for example, a dispersant, such as a polymer dispersant, which has been generally used to prepare a pigment dispersion liquid may be mentioned. As a particular example thereof, for example, there may be mentioned a dispersant containing as a primary component, at least one selected from a polyoxyalkylene polyalkylene polyamine, a vinyl-based polymer or its copolymer, an acrylic-based polymer or its copolymer, a polyester, a polyamide, a polyimide, a polyurethane, an amino-based polymer, a silicon-containing polymer, a sulfur-containing polymer, a fluorine-containing polymer, and an epoxy resin. The dispersant may be used alone, or at least two types thereof may be used in combination.

As a commercially available product of the polymer dispersant, for example, there may be mentioned Ajisper (registered trademark) Series manufactured by Ajinomoto Fine-Techno Co., Inc.; Solsperse (registered trademark) Series, such as Solsperse 36000, available from Avecia or Noveon; Disper BYK Series manufactured by BYK Additives & Instruments; or Disperlon (registered trademark) Series manufactured by Kusumoto Chemicals, Ltd.

A content of the dispersant with respect to the total mass of the ink is preferably 0.1 to 2.0 percent by mass, more preferably 0.1 to 1.0 percent by mass, and further preferably 0.1 to 0.5 percent by mass.

When the dye is used as the colorant, the dye is not particularly limited, and for example, an acidic dye, a direct dye, a reactive dye, or a basic dye may be used. As the dye, for example, there may be mentioned C.I. Acid Yellow 17, 23, 42, 44, 79, or 142, C.I. Acid Red 52, 80, 82, 249, 254, or 289, C.I. Acid Blue 9, 45, or 249, C.I. Acid Black 1, 2, 24, or 94, C.I. Food Black 1 or 2, C.I. Direct Yellow 1, 12, 24, 33, 50, 55, 58, 86, 132, 142, 144, or 173, C.I. Direct Red 1, 4, 9, 80, 81, 225, or 227, C.I. Direct Blue 1, 2, 15, 71, 86, 87, 98, 165, 199, or 202, C.I. Direct Black 19, 38, 51, 71, 154, 168, 171, or 195, C.I. Reactive Red 14, 32, 55, 79, or 249, or C.I. Reactive Black 3, 4, or 35.

The dyes mentioned above may be used alone, or at least two types thereof may be used in combination.

A content of the colorant in the first ink with respect to the total mass of the ink is preferably 0.2 to 20.0 percent by mass, more preferably 0.5 to 15.0 percent by mass, and further preferably 1.0 to 10.0 percent by mass.

### 1.6.2. Polymerizable Compound

The polymerizable compound contained in the first ink includes a monofunctional monomer, and if needed, may also include a polyfunctional monomer and/or a polymerizable oligomer.

### 1.6.2.1. Monofunctional Monomer

A content of the monofunctional monomer in the first ink with respect to the total mass of the polymerizable compound contained in the first ink is preferably 80 percent by mass or more, preferably 85 percent by mass or more, and further preferably 90 percent by mass or more. In addition, the content of the monofunctional monomer described above is preferably 99 percent by mass or less and further preferably 98 percent by mass or less. Since the content of the monofunctional monomer is 80 percent by mass or more, the flexibility of the cured coating film 71 of the first ink can be increased. Hence, the adhesion of the cured coating film 71 of the first ink to the recording medium 6 is further improved.

Although the monofunctional monomer is not particularly limited, for example, a monofunctional monomer having an alicyclic group, a monofunctional monomer having an aromatic group, or a monofunctional monomer having a nitrogen-containing hetero ring may be mentioned. As the monofunctional monomer, at least one monofunctional monomer other than those mentioned above may also be used.

Since the monofunctional monomer is used, a recorded matter 7 in which the flexibility of the cured coating film 71 is improved and in which the adhesion thereof to the recording medium 6 is excellent can be advantageously obtained. On the other hand, when a recorded matter 7 in which the cured coating film 71 of the first ink is formed to have a high adhesion is laminated such that the recording surface 61 and the non-recording surface 62 face each other, because of the high adhesion thereof described above, the blocking is disadvantageously liable to occur. According to the present disclosure, since the cured coating film 71 of the first ink is formed, and subsequently, the cured coating film 72 of the second ink containing titanium oxide particles is formed, although the cured coating film 71 of the first ink has an excellent adhesion to the recording medium 6 because of the characteristics of the monofunctional monomer, a recorded matter 7 in which the blocking is not likely to occur can be obtained. Since the adhesion and the blocking suppression can be simultaneously obtained, the present disclosure is particularly effective.

### 1.6.2.1.1. Monofunctional Monomer Having Alicyclic Group

Although the monofunctional monomer having an alicyclic group is not particularly limited, for example, there may be mentioned an alicyclic group-containing (meth)acrylate, such as dicyclopentenyl (meth)acrylate, dicyclopentenyloxyethyl (meth)acrylate, dicyclopentanyl (meth)acrylate, 3,3,5-trimethylcyclohexyl (meth)acrylate, isobornyl (meth)acrylate, tert-butylcyclohexanol (meth)acrylate, or 2-(meth)acrylic acid-1,4-dioxaspiro[4,5]deci-2-ylmethyl.

Among those mentioned above, dicyclopentenyl (meth)acrylate (DCPA) or isobornyl acrylate (IBXA) is preferable. Since the monomer as described above is used, the adhesion and an abrasion resistance of a cured coating film to be obtained are further improved.

A content of the monofunctional monomer having an alicyclic group with respect to the total mass of the polymerizable compound contained in the first ink is preferably 25 to 55 percent by mass, more preferably 30 to 50 percent by mass, and further preferably 35 to 45 percent by mass. Since the content of the monofunctional monomer having an alicyclic group is in the range described above, the adhesion and the abrasion resistance of a cured coating film to be obtained are further improved.

### 1.6.2.1.2. Monofunctional Monomer Having Aromatic Group

Although the monofunctional monomer having an aromatic group is not particularly limited, for example, there may be mentioned phenoxyethyl (meth)acrylate, benzyl (meth)acrylate, an alkoxylated 2-phenoxyehtyl (meth)acrylate, ethoxylated nonylphenyl (meth)acrylate, an alkoxylated nonylphenyl (meth)acrylate, a p-cumylphenol EO-modified (meth)acrylate, or 2-hydroxy-3-phenoxypropyl (meth)acrylate.

Among those mentioned above, phenoxyethyl acrylate (PEA) is preferable. Since the aromatic group-containing monofunctional monomer as described above is used, solubility of the photopolymerization initiator is further improved, and a curing property of the ink is further improved. In addition, when an acylphosphine oxide-based photopolymerization initiator or a thioxanthone-based photopolymerization initiator is used, the solubility of the photopolymerization initiator is made more preferable.

A content of the monofunctional monomer having an aromatic group with respect to the total mass of the polymerizable compound contained in the first ink is preferably 20 to 50 percent by mass, more preferably 25 to 45 percent by mass, and further preferably 28 to 40 percent by mass. Since the content of the monofunctional monomer having an aromatic group is in the range described above, the adhesion and the abrasion resistance of the cured coating film are further improved.

### 1.6.2.1.3. Nitrogen-Containing Monofunctional Monomer

Although the nitrogen-containing monofunctional monomer is not particularly limited, for example, there may be mentioned a nitrogen-containing monofunctional vinyl monomer, such as N-vinyl caprolactam, N-vinyl formamide, N-vinyl carbazole, N-vinyl acetamide, or N-vinyl pyrrolidone; an nitrogen-containing monofunctional acrylate monomer such as acryloylmorpholine; or a nitrogen-containing monofunctional acrylamide monomer, such as (meth)acrylamide, N-hydroxymethyl (meth)acrylamide, diacetone acrylamide, N,N-dimethyl (meth)acrylamide, or (meth)acrylamide of dimethylamino ethylacrylate benzyl chloride quaternary or the like.

Among those mentioned above, a monomer having a nitrogen-containing hetero ring structure, such as N-vinyl caprolactam, N-vinyl carbazole, N-vinyl pyrrolidone, or acryloylmorpholine (ACMO) is more preferable, and acryloylmorpholine is further preferably contained. Since the nitrogen-containing monofunctional monomer as described above is used, the abrasion resistance of the cured coating film is further improved. Furthermore, a nitrogen-containing monofunctional acrylate monomer having a nitrogen-containing hetero ring structure, such as acryloylmorpholine, further improves stretchability and the adhesion of the cured coating film.

A content of the nitrogen-containing monofunctional monomer with respect to the total mass of the polymerizable compound contained in the first ink is preferably 10 to 25 percent by mass, more preferably 12 to 23 percent by mass, and further preferably 15 to 20 percent by mass. Since the content of the nitrogen-containing monofunctional monomer is in the range described above, the abrasion resistance and the adhesion of the cured coating film are further improved.

### 1.6.2.2. Polyfunctional Monomer

Although the polyfunctional monomer is not particularly limited, for example, a vinyl group-containing (meth)acrylate or a polyfunctional (meth)acrylate may be mentioned. 1.6.2.2.1. Vinyl Group-Containing (Meth)Acrylate

Although the vinyl group-containing (meth)acrylate is not particularly limited, for example, a compound represented by the formula (1) may be mentioned.

H₂C=CR₁-CO-OR₂-O-CH=CH-R₃ (1)

In the above formula, R₁ represents a hydrogen atom or a methyl group, R₂ represents a divalent organic residue having 2 to 20 carbon atoms, and R₃ represents a hydrogen atom or a monovalent organic residue having 1 to 11 carbon atoms.

In the above formula (1), as the divalent organic residue having 2 to 20 carbon atoms represented by R₂, for example, there may be mentioned a linear, branched, or cyclic substituted or unsubstituted alkylene group having 2 to 20 carbon atoms, a substituted or unsubstituted alkylene group having an oxygen atom of an ether bond and/or an ester bond in its structure and 2 to 20 carbon atoms, or a substituted or unsubstituted divalent aromatic group having 6 to 11 carbon atoms.

Among those mentioned above, for example, an alkylene group, such as an ethylene group, an n-propylene group, an isopropylene group, or a butylene group, having 2 to 6 carbon atoms; or an alkylene group, such as an oxyethylene group, an oxy-n-propylene group, an oxyisopropylene group, or an oxybutylene group, having an oxygen atom of an ether bond in its structure and 2 to 9 carbon atoms is preferable. In addition, in order to further decrease the viscosity of the composition and to further improve the curing property thereof, a compound having a glycol ether chain in which R₂ represents an alkylene group, such as an oxyethylene group, an oxy-n-propylene group, an oxyisopropylene group, or an oxybutylene group, having an oxygen atom of an ether bond in its structure and 2 to 9 carbon atoms is more preferable.

In the above formula (1), as the monovalent organic residue having 1 to 11 carbon atoms represented by R₃, a linear, branched, or cyclic substituted or unsubstituted alkyl group having 1 to 10 carbon atoms or a substituted or unsubstituted aromatic group having 6 to 11 carbon atoms is preferable.

Among those mentioned above, an alkyl group, such as a methyl group or an ethyl group, having 1 to 2 carbon atoms or an aromatic group, such as a benzyl group, having 6 to 8 carbon atoms is preferably used.

Although a concrete example of the compound represented by the formula (1) is not particularly limited, for example, (meth)acrylic acid 2-(2-vinyloxyethoxy)ethyl may be mentioned, and acrylic acid 2-(2-vinyloxyethoxy)ethyl (VEEA) is preferable.

In particular, the first ink preferably contains as the polyfunctional monomer, a vinyl group-containing (meth)acrylate represented by the above formula (1). Accordingly, the curing property of the first ink is further improved.

A content of the vinyl group-containing (meth)acrylate with respect to the total mass of the polymerizable compound contained in the first ink is preferably 1 to 25 percent by mass, more preferably 2 to 20 percent by mass, and further preferably 3 to 15 percent by mass. Since the content of the vinyl group-containing (meth)acrylate is in the range described above, the viscosity of the ink is decreased, and the ejection stability thereof is further improved. 1.6.2.2.2. Polyfunctional (Meth)Acrylate

Although the polyfunctional (meth)acrylate is not particularly limited, for example, there may be mentioned a difunctional (meth)acrylate, such as dipropylene glycol di(meth)acrylate, diethylene glycol di(meth)acrylate, or triethylene glycol di(meth)acrylate; or a polyfunctional (meth)acrylate having at least three functional groups, such as trimethylolpropane tri(meth)acrylate, an EO-modified trimethylolpropane tri(meth)acrylate, pentaerythritol tri(meth)acrylate, or pentaerythritol tetra(meth)acrylate.

Among those mentioned above, dipropylene glycol diacrylate (DPGDA) is preferable. Since the polyfunctional (meth)acrylate as described above is used, the curing property of the ink and the abrasion resistance of the cured coating film are further improved.

A content of the polyfunctional (meth)acrylate with respect to the total mass of the polymerizable compound is preferably 1 to 10 percent by mass, more preferably 2 to 8 percent by mass, and further preferably 3 to 7 percent by mass. Since the content of the polyfunctional (meth)acrylate is in the range described above, the curing property of the ink and the abrasion resistance of the cured coating film are further improved.

### 1.6.3. Photopolymerization Initiator

Although the photopolymerization initiator is not particularly limited as long as generating active species when irradiated with radioactive rays, for example, there may be mentioned a known photopolymerization initiator, such as an acylphosphine oxide-based photopolymerization initiator, an alkylphenone-based photopolymerization initiator, a titanocene-based photopolymerization initiator, or a thioxanthone-based photopolymerization initiator. Among those mentioned above, an acylphosphine oxide-based photopolymerization initiator is preferable. Since the photopolymerization initiator as described above is used, the curing property of the ink is further improved, and in particular, the curing property thereof in a curing process by light emitted from an UV-LED is further improved. The photopolymerization initiator may be used alone, or at least two types thereof may be used in combination.

Although the acylphosphine oxide-based photopolymerization initiator is not particularly limited, for example, 2,4,6-trimethylbenzoyl diphenylphosphine oxide, bis(2,4,6-trimethylbenzoyl)-phenylphosphine oxide, or bis(2,6-dimethoxybenzoyl)-2,4,4-trimethylphosphine oxide may be mentioned.

As a commercially available product of the acylphosphine oxide-based photopolymerization initiator as described above, for example, there may be mentioned IRGACURE (registered trademark) 819 (bis(2,4,6-trimethylbenzoyl)-phenylphosphine oxide), IRGACURE 1800 (mixture of bis(2,6-dimethoxybenzoyl)-2,4,4-trimethylpentylphosphine oxide and 1-hydroxy-cyclohexyl-phenylketone at a mass ratio of 25: 75), or IRGACURE TPO (2,4,6-trimethylbenzoyl-diphenylphosphine oxide) each of which is manufactured by BASF.

A content of the photopolymerization initiator with respect to the total mass of the first ink is preferably 3.0 to 15.0 percent by mass, more preferably 5.0 to 13.5 percent by mass, and further preferably 8.0 to 12.0 percent by mass. Since the content of the photopolymerization initiator is in the range described above, the curing property of the ink and the solubility of the photopolymerization initiator are further improved.

### 1.6.4. Polymerization Inhibitor

Although the polymerization inhibitor is not particularly limited, for example, there may be mentioned p-methoxyphenol, hydroquinone monomethyl ether (MEHQ), 4-hydroxy-2,2,6,6,-tetramethylpiperidine-N-oxyl, hydroquinone, cresol, t-butylcatecol, 3,5-di-t-butyl-4-hydroxytoluene, 2,2'-methylene bis(4-methyl-6-t-butylphenol), 2,2'-methylene bis(4-ethyl-6-butylphenol), 4,4'-thiobis(3-methyl-6-t-butylphenol), or a hindered amine compound. The polymerization inhibitor may be used alone, or at least two types thereof may be used in combination.

A content of the polymerization inhibitor with respect to the total mass of the first ink is preferably 0.05 to 1.00 percent by mass and more preferably 0.05 to 0.50 percent by mass. 1.6.5. Surfactant

As the surfactant, a silicone-based surfactant is preferable, and a polyester-modified silicone or a polyether-modified silicone is more preferable. As the polyester-modified silicone, for example, BYK (registered trademark)-347 or 348, or BYK-UV3500, 3510, or 3530 manufactured by BYK may be mentioned, and as the polyether-modified silicone, for example, BYK-3570 may be mentioned. The surfactant may be used alone, or at least two types thereof may be used in combination.

A content of the surfactant with respect to the total mass of the first ink is preferably 0.01 to 2.00 percent by mass and more preferably 0.05 to 1.00 percent by mass.

### 1.7. Second Ink

The second ink is a radiation curable ink jet composition. The second ink is a white ink, and except for that a titanium oxide is contained as the colorant, components, such as a polymerizable compound, a photopolymerization initiator, a polymerization inhibitor, a surfactant, a dispersant, and the like contained in the ink may be the same as or different from those contained in the first ink. Hereinafter, although the second ink will be described, points different from those of the first ink will be described, and description on the same points as those of the first ink will be omitted.

### 1.7.1. Titanium Oxide

The second ink contains a titanium oxide as the colorant. Although the titanium oxide may be, for example, either a modified type titanium oxide having a surface modified with a surface modifier or a non-modified type titanium oxide having a non-modified surface, in view of dispersibility, weather resistance, and the like, a surface modified type titanium oxide having a modified surface is preferable.

The form of the titanium oxide is not particularly limited, and for example, an amorphous form, an anatase crystalline form, or a rutile crystalline form may be mentioned, and in order to further improve a shielding property, a rutile crystalline form is preferable.

As the titanium oxide, a commercially available product may be used, and for example, there may be mentioned CR-50, CR-50-2, CR-57, CR-Super70, CR-80, CR-90, CR-90-2, CR-93, CR-95, CR-953, CR-97, R-820, R-830, R-930, UT771, or PFC105 (trade name, manufactured by Ishihara Sangyo Kaisha, Ltd.); or R-38L (trade name, manufactured by Sakai Chemical Industry Co., Ltd.). Those commercially available products may be used alone, or at least two types thereof may be used in combination.

An average particle diameter of the titanium oxide is preferably 150 nm or more, more preferably 200 nm or more, and further preferably 300 nm or more. Since the average particle diameter of the titanium oxide is in the range described above, when the recorded matter 7 is laminated such that the recording surface 61 and the non-recording surface 62 face each other, the recording surface 61 and the non-recording surface 62 can be suppressed from being closely stuck to each other. Hence, the blocking in which the recording surface 61 and the non-recording surface 62 are stuck to each other can be suppressed. In addition, when the average particle diameter of the titanium oxide is in the range described above, the shielding property of the cured coating film 72 of the second ink can be further improved.

In addition, the average particle diameter of the titanium oxide is preferably 400 nm or less, more preferably 380 nm or less, and further preferably 360 nm or less. Since the average particle diameter of the titanium oxide is in the range described above, the shielding property of the cured coating film 72 of the second ink is further improved, and sedimentation characteristics of the second ink can be preferably maintained.

The "average particle diameter" is defined as a particle diameter at a cumulative volume of 50% in a volume-based particle size distribution obtained by a laser diffraction/scattering method. The measurement of the average particle diameter is performed by a dynamic light scattering method or a laser diffraction method described in JIS Z8825. In particular, a particle size distribution meter, such as "Microtrac UPA" (manufactured by Nikkiso Co., Ltd.), using a dynamic light scattering method as a measurement principle may be used.

A content of the titanium oxide with respect to the total mass of the second ink is preferably 15 percent by mass or more and more preferably 16 percent by mass or more. In addition, the content of the titanium oxide with respect to the total mass of the second ink is preferably 30 percent by mass or less, more preferably 25 percent by mass or less, and further preferably 20 percent by mass or less. Since the content of the titanium oxide is in the range described above, when the recorded matter 7 is laminated such that the recording surface 61 and the non-recording surface 62 face each other, the recording surface 61 and the non-recording surface 62 are suppressed by the titanium oxide from being closely stuck to each other, and hence, the blocking is suppressed. In addition, since the cured coating film 72 of the second ink contains a large amount of the titanium oxide, the degree of whiteness of the background is increased, and as a result, the visibility is improved.

### 1.7.2. Monofunctional Monomer

A content of a monofunctional monomer in the second ink with respect to a total mass of the polymerizable compound contained in the second ink is 80 percent by mass or more, preferably 85 percent by mass or more, and more preferably 90 percent by mass or more. In addition, the content of the monofunctional monomer described above is preferably 99 percent by mass or less and more preferably 98 percent by mass or less. Since the content of the monofunctional monomer is 80 percent by mass or more, the flexibility of the cured coating film 72 of the second ink can be increased. Hence, the adhesion of the cured coating film 72 of the second ink to the recording medium 6 can be further improved. In addition, since the cured coating film 72 of the second ink is made flexible, when the recorded matter 7 is processed and then used, the cured coating film 72 may be easily prevented from being damaged.

Furthermore, the second ink contains a titanium oxide in the form of hard particles. Accordingly, the cured coating film 72 of the second ink has a hardness besides the flexibility. As a result, when the recorded matter 7 is laminated such that the recording surface 61 and the non-recording surface 62 face each other, the blocking can be suppressed.

Although the monofunctional monomer is not particularly limited, for example, a monofunctional monomer having an alicyclic group, a monofunctional monomer having an aromatic group, or a monofunctional monomer having a nitrogen-containing hetero ring may be mentioned.

### 2. Recorded Matter

In FIG. 2, a schematic cross-sectional view of the recorded matter 7 of this embodiment is shown. As shown in FIG. 2, the recorded matter 7 of this embodiment includes the recording medium 6 which has the recording surface 61 to which the first ink and the second ink are adhered and the non-recording surface 62 to which the first ink and the second ink are not adhered; the cured coating film 71 of the first ink formed on the recording surface 61 of the recording medium 6; and the cured coating film 72 of the second ink.

After the cured coating film 71 of the first ink, which is the non-white ink, is formed on the recording medium 6, since the cured coating film 72 of the second ink containing a titanium oxide is formed, when the recorded matter 7 is laminated such that the recording surface 61 and the non-recording surface 62 face each other, the recording surface 61 and the non-recording surface 62 are suppressed from being closely stuck to each other, and as a result, the blocking is suppressed.

The recording medium 6 used in this embodiment is a long sheet as shown in FIG. 1, and the recorded matter 7 may be stored in the form of a wound body wound by the winding roller 52. Since the recorded matter 7 is stored in the form of a wound body, a storage space of the recorded matter 7 can be efficiently used.

On the other hand, since the wound body is formed, the recording surface 61 and the non-recording surface 62 of the recorded matter 7 come into contact with each other; however, the cured coating film 72 of the second ink contains a titanium oxide in the form of hard particles, and hence, the hardness of the cured coating film 72 of the second ink is increased. Accordingly, even when the recording surface 61 and the non-recording surface 62 are closely stuck to each other, the blocking can be suppressed.

In addition, in the case in which the recorded matter 7 is used as a label or the like, when the wound body is rewound, sticking marks are suppressed from being left on the recording surface 61, and/or the cured coating film 71 of the first ink and/or the cured coating film 72 of the second ink is also suppressed from being partially stuck to the non-recording surface 62. That is, even when the recorded matter 7 is wound by the winding roller 52 and then stored in the form of a wound body, the recording surface 61 and the non-recording surface 62 of the recorded matter 7 are suppressed from being closely stuck to each other, and the blocking can be suppressed; hence, the present disclosure is particularly effective.

In particular, in order to improve the adhesion of the cured coating film 71 formed from the first ink to the recording medium 6, when the first ink contains a large amount of the monofunctional monomer, the recording surface 61 and the non-recording surface 62 are liable to be stuck to each other, and the blocking is liable to occur. However, in the recorded matter 7 of this embodiment, since the cured coating film 72 of the second ink contains a titanium oxide in the form of hard particles, the recording surface 61 and the non-recording surface 62 are suppressed from being closely stuck to each other, and hence, the blocking can be suppressed.

### 3. Examples

Hereinafter, the present disclosure will be described in detail with reference to Examples and Comparative Examples. However, the present disclosure is not limited at all to the following Examples.

### 3.1. Preparation of Ink

First, a colorant, a dispersant, and parts of individual monomers were weighed and charged in a pigment dispersion tank and were then stirred with ceramic-made beads each having a diameter of 1 mm, so that a pigment dispersion liquid in which the colorant was dispersed in the monomers was obtained.

Subsequently, after the remaining monomers, a photopolymerization initiator, and a polymerization inhibitor were charged to obtain one of the compositions shown in Tables 1 and 2 into a mixing tank which was a stainless steel-made container and were fully dissolved by mixing and stirring, the pigment dispersion liquid obtained as described above was charged, and mixing and stirring were then further performed for one hour at ordinary temperature. Next, filtration was performed using a 5-µm membrane filter, so that first inks and second inks of Examples and Comparative Examples were each obtained. In addition, the numerical values of the individual components of Examples and Comparative Examples shown in the tables each represent percent by mass.

**Table 1**

| | | | FIRST INK | | | | |
|---|---|---|---|---|---|---|---|
| | | | 1 | 2 | 3 | 4 | 5 |
| POLYMERIZABLE COMPOUND | MONOFUNCTIONAL MONOMER | IBXA | 27.00 | 30.00 | 25.00 | 5.15 | 20.00 |
| | | PEA | 32.15 | 37.15 | 30.15 | 50.00 | 31.15 |
| | | ACMO | 15.00 | 16.00 | 15.00 | 15.00 | 15.00 |
| | POLYFUNCTIONAL MONOMER | DPGDA | 0.00 | 0.00 | 0.00 | 0.00 | 0.00 |
| | | VEEA | 12.00 | 3.00 | 16.00 | 16.00 | 20.00 |
| POLYMERIZATION INHIBITOR | | MEHQ | 0.20 | 0.20 | 0.20 | 0.20 | 0.20 |
| PHOTOPOLYMERIZATION INITIATOR | | 819 | 5.00 | 5.00 | 5.00 | 5.00 | 5.00 |
| | | TPO | 5.00 | 5.00 | 5.00 | 5.00 | 5.00 |
| SURFACTANT | BYK UV3500 | | 0.50 | 0.50 | 0.50 | 0.50 | 0.50 |
| DISPERSANT | Solsperse36000 | | 0.15 | 0.15 | 0.15 | 0.15 | 0.15 |
| COLORANT | CARBON BLACK | | 3.00 | 3.00 | 3.00 | 3.00 | 3.00 |
| TOTAL | | | 100.00 | 100.00 | 100.00 | 100.00 | 100.00 |
| CONTENT OF MONOFUNCTIONAL MONOMER WITH RESPECT TO TOTAL MASS OF POLYMERIZABLE COMPOUND (%) | | | 86 | 97 | 81 | 81 | 77 |

**Table 2**

| | | | SECOND INK | | | | | | | | |
|---|---|---|---|---|---|---|---|---|---|---|---|
| | | | 1 | 2 | 3 | 4 | 5 | 6 | 7 | 8 | 9 |
| POLYMERIZABLE COMPOUND | MONOFUNCTIONAL MONOMER | IBXA | 25.00 | 29.00 | 20.00 | 20.00 | 20.00 | 20.00 | 20.00 | 0.00 | 0.00 |
| | | PEA | 22.30 | 22.30 | 22.30 | 18.30 | 14.30 | 26.55 | 30.95 | 43.30 | 43.30 |
| | | ACMO | 14.00 | 14.00 | 14.00 | 14.00 | 14.00 | 15.00 | 15.00 | 11.00 | 11.00 |
| | POLYFUNCTIONAL MONOMER | DPGDA | 0.00 | 0.00 | 0.00 | 0.00 | 0.00 | 0.00 | 0.00 | 14.00 | 0.00 |
| | | VEEA | 7.00 | 3.00 | 12.00 | 16.00 | 20.00 | 12.00 | 16.00 | 0.00 | 14.00 |
| POLYMERIZATION INHIBITOR | | MEHQ | 0.20 | 0.20 | 0.20 | 0.20 | 0.20 | 0.20 | 0.20 | 0.20 | 0.20 |
| PHOTOPOLYMERIZATION INITIATOR | | 819 | 5.00 | 5.00 | 5.00 | 5.00 | 5.00 | 5.00 | 5.00 | 5.00 | 5.00 |
| | | TPO | 5.00 | 5.00 | 5.00 | 5.00 | 5.00 | 5.00 | 5.00 | 5.00 | 5.00 |
| SURFACTANT | BYK UV3500 | | 0.50 | 0.50 | 0.50 | 0.50 | 0.50 | 0.50 | 0.50 | 0.50 | 0.50 |
| DISPERSANT | Solsperse36000 | | 1.00 | 1.00 | 1.00 | 1.00 | 1.00 | 0.75 | 0.35 | 1.00 | 1.00 |
| COLORANT | TITANIUM OXIDE | | 20.00 | 20.00 | 20.00 | 20.00 | 20.00 | 15.00 | 7.00 | 20.00 | 20.00 |
| TOTAL | | | 100.00 | 100.00 | 100.00 | 100.00 | 100.00 | 100.00 | 100.00 | 100.00 | 100.00 |
| CONTENT OF MONOMER WITH OF POLYMERIZABLE MONOFUNCTIONAL RESPECT TO TOTAL POLYMERIZABLE COMPOUND MASS (%) | | | 90 | 96 | 82 | 77 | 71 | 84 | 80 | 80 | 80 |

### Monofunctional Monomer

- IBXA (isobornyl acrylate, manufactured by Osaka Organic Chemical Industry Ltd.)
- PEA (trade name: "Viscoat #192", phenoxyethyl acrylate, manufactured by Osaka Organic Chemical Industry Ltd.)
- ACMO (acryloylmorpholine, manufactured by KJ Chemicals Corporation)
   Polyfunctional Monomer
- DPGDA (trade name: "SR508", dipropyle glycol diacrylate, manufactured by Sartomer)
- VEEA (acrylic acid 2-(2-vinyloxyethoxy)ethyl, manufactured by Nippon Shokubai Co., Ltd.) Photopolymerization Initiator
- 819 (trade name: "IRGACURE 819", bis(2,4,6-trimethylbenzoyl)-phenylphosphine oxide, manufactured by BASF)
- TPO (trade name: "IRGACURE TPO", 2,4,6-trimethylbenzoyl diphenylphosphine oxide, manufactured by BASF)
   Polymerization Inhibitor
- MEHQ (trade name: "p-Methoxyphenol", hydroquinone monomethyl ether, manufactured by Kanto Chemical Co., Inc.)
   Surfactant
- BYK-UV3500 (polyether modified silicone having acryloyl group, manufactured by BYK Additives & Instruments)
   Colorant (Pigment)
- Carbon black (trade name: "MA-100", carbon black, manufactured by Mitsubishi Chemical Corporation)
- Titanium oxide (trade name: "CR-93", titanium oxide, average particle diameter D50: 300 nm, manufactured by Ishihara Sangyo Kaisha, Ltd.)
   Dispersant
- Solsperse36000 (polymer dispersant, manufactured by Lubrizol)

In Table 1 and Table 2, "Content Of Monofunctional Monomer With Respect To Total Mass Of Polymerizable Compound" indicates a rate (percent by mass) of the content of the monofunctional monomer with respect to the total content of the polymerizable compound.

### 3.2. Evaluation Method

### 3.2.1. Evaluation of Adhesion

As the recording apparatus 1, a printer (PX-G5000 modified machine, manufactured by Seiko Epson Corporation) mounting an LED was used, and by using the first ink and the second ink shown in Table 3 in combination, a recorded matter was formed on a biaxial oriented polypropylene film (trade name: "FOA 20", thickness: 20 µm or less, manufactured by Futamura Chemical Co., Ltd., hereinafter, referred to as "OPP film"). In this case, a solid image was formed by the first ink at 20 ng/dot, 600 dpi×600 dpi, and a duty of 100% and was then irradiated with ultraviolet rays at a radiation energy of 400 mJ/cm², so that the cured coating film 71 was formed.

In addition, the second ink was adhered on the cured coating film 71 of the first ink at 20 ng/dot, 600 dpi×600 dpi, and a duty of 100%, so that a solid image was formed. In addition, in Comparative Examples 2 to 5, the adhesion of the second ink functioning as an upper layer was not performed, and the following evaluation was performed. After the second ink was adhered, the second ink was also irradiated with ultraviolet rays at a radiation energy of 400 mJ/cm², so that a recorded matter was obtained.

The adhesion of the recorded matter formed by the method described above was evaluated by a cross-cut test. That is, after cutting lines were formed in each of the cured coating films 71 and 72 thus obtained, and a transparent adhesive tape was adhered to a portion of the cutting lines and then sufficiently rubbed so that the cured coating films 71 and 72 were each viewed through the tape. Subsequently, within 5 minutes after the tape was adhered, the tape was peeled away from the cured coating films 71 and 72 at an angle of 60° for 0.5 to 1.0 second. Next, based on the presence or absence of peeling of each of the cured coating films 71 and 72 from the OPP film, the adhesion was evaluated by the following evaluation criteria.

### Evaluation Criteria

A: No peeling is observed.
B: Less than half of the area covered with the tape is peeled away.
C: Half or more of the area covered with the tape is peeled away.
D: The area covered with the tape is all peeled away.

### 3.2.2. Evaluation of Blocking

After another OPP film on which no recording was performed was overlapped on a recording surface of the recorded matter formed for the above adhesion evaluation to which the first ink and the second ink were adhered, a load was applied on the another OPP film, so that a pseudo wound body was formed. After this wound body was held for 10 minutes, the OPP film of the recorded matter and the another OPP film were peeled away from each other, and whether or not sticking marks of the another OPP film were left on the recording surface was confirmed by visual inspection, so that the presence or absence of the sticking was evaluated. The evaluation criteria are as described below.

### Evaluation Criteria

AA: No sticking is observed even at a load of 1,800 N/m².
A: Although sticking is observed at a load of 1,800 N/m², no sticking is observed at a load of 1,500 N/m².
B: Although sticking is observed at a load of 1,500 N/m², no sticking is observed at a load of 1,200 N/m².
C: Although sticking is observed at a load of 1,200 N/m², no sticking is observed at a load of 1,000 N/m².
D: Although sticking is observed at a load of 1,000 N/m², no sticking is observed at a load of 800 N/m².
E: Sticking is observed even at a load of 800 N/m².

**Table 3**

| | INK | | EVALUATION RESULT | |
|---|---|---|---|---|
| | FIRST INK | SECOND INK | ADHESION | BLOCKING |
| EXAMPLE 1 | 1 | 1 | A | A |
| EXAMPLE 2 | 1 | 2 | A | B |
| EXAMPLE 3 | 1 | 3 | B | A |
| EXAMPLE 4 | 1 | 4 | C | A |
| EXAMPLE 5 | 1 | 5 | C | AA |
| EXAMPLE 6 | 1 | 6 | B | B |
| EXAMPLE 7 | 1 | 7 | B | C |
| EXAMPLE 8 | 1 | 8 | B | A |
| EXAMPLE 9 | 1 | 9 | B | A |
| EXAMPLE 10 | 2 | 1 | A | A |
| EXAMPLE 11 | 3 | 1 | B | A |
| EXAMPLE 12 | 4 | 1 | B | A |
| COMPARATIVE EXAMPLE 1 | 5 | 1 | D | A |
| COMPARATIVE EXAMPLE 2 | 1 | No | A | E |
| COMPARATIVE EXAMPLE 3 | 2 | No | A | D |
| COMPARATIVE EXAMPLE 4 | 3 | No | B | D |
| COMPARATIVE EXAMPLE 5 | 4 | No | B | D |

### 3. Evaluation Results

In Table 3, the evaluation results are shown. From Table 3, it was found that according to the method for manufacturing a recorded matter of the present disclosure, the adhesion of the cured coating film is high, and when the recorded matter is laminated such that the recording surface and the non-recording surface face each other, the blocking can be suppressed.

## Claims

1. A method for manufacturing a recorded matter, comprising:
a first ejection step of ejecting a first ink which is a radiation curable ink jet composition from a first ink jet head so as to be adhered to a recording medium;
a first emission step of emitting radioactive rays to the first ink adhered to the recording medium to form a cured coating film of the first ink;
a second ejection step of ejecting a second ink which is a radiation curable ink jet composition from a second ink jet head so as to be adhered to the cured coating film of the first ink;
a second emission step of emitting radioactive rays to the second ink adhered to the recording medium to cure the second ink so as to form at least one recorded matter; and
a lamination step of laminating the recorded matter such that a recording surface to which the first ink and the second ink are adhered and a non-recording surface to which the first ink and the second ink are not adhered face each other,
wherein the first ink contains a polymerizable compound including a monofunctional monomer, and a content of the monofunctional monomer with respect to a total mass of the polymerizable compound contained in the first ink is 80 percent by mass or more, and
the first ink is a non-white ink, and the second ink is a white ink containing a titanium oxide as a colorant.

2. The method for manufacturing a recorded matter according to claim 1,
wherein the lamination step includes a step of winding the recorded matter in the form of a roll such that the recording surface and the non-recording surface face each other.

3. The method for manufacturing a recorded matter according to claim 1,
wherein the recording surface and the non-recording surface of the recording medium each have a non-absorbing property.

4. The method for manufacturing a recorded matter according to claim 1,
wherein the recording medium is a transparent substrate.

5. The method for manufacturing a recorded matter according to claim 1,
wherein the second ink contains a polymerizable compound including a monofunctional monomer, and a content of the monofunctional monomer with respect to a total mass of the polymerizable compound contained in the second ink is 80 percent by mass or more.

6. The method for manufacturing a recorded matter according to claim 1,
wherein the titanium oxide has an average particle diameter of 150 nm or more.

7. The method for manufacturing a recorded matter according to claim 1,
wherein a content of the titanium oxide contained in the second ink is 15 percent by mass or more with respect to a total mass of the second ink.

8. The method for manufacturing a recorded matter according to claim 1,
wherein the first ink jet head and the second ink jet head are each a line ink jet head formed such that ink ejection nozzles formed in a direction intersecting a transport direction of the recording medium cover a print region of the recording medium in the direction.
